Europäisches Patentamt

**European Patent Office**

**Office européen des brevets**

(19)

(11) Publication number: **0 017 365**
**B1**

(12) **EUROPEAN PATENT SPECIFICATION**

(45) Date of publication of patent specification: **15.06.83**

(21) Application number: **80300789.7**

(22) Date of filing: **14.03.80**

(51) Int. Cl.³: **F 16 K 37/00,**
**G 01 M 19/00**

(54) **Apparatus for measuring the set pressure of a safety valve.**

(30) Priority: **20.03.79 US 22197**

(43) Date of publication of application:
**15.10.80 Bulletin 80/21**

(45) Publication of the grant of the patent:
**15.06.83 Bulletin 83/24**

(84) Designated Contracting States:
**BE CH DE GB IT NL SE**

(56) References cited:
**EP - A - 0 007 769**
**US - A - 1 637 743**
**US - A - 2 419 293**
**US - A - 3 269 170**

(73) Proprietor: **CROSBY VALVE & GAGE COMPANY**
**43 Kendrick Street**
**Wrentham Massachusetts 02093 (US)**

(72) Inventor: **Thompson, Leonard J.**
**175 Walnut Road**
**Wrentham Massachusetts 02093 (US)**

(74) Representative: **Hughes, Brian P. et al,**
**Graham Watt & Co. Riverhead**
**Sevenoaks, Kent TN13 2BN (GB)**

Apparatus for measuring the set pressure of a safety valve

## Background of the Disclosure

The present invention relates to pressure line instrumentation, and more particularly to safety valve set pressure measuring devices.

In the prior art, pressure lines are often designed with safety valves located at various positions along their length. The conventional valves, such as the Type HB Valves, manufactured by Crosby Valve and Gage Company, Wrentham, Massachusetts, include a closure element which is nominally biased against the port to seal the port. Typically, this bias is provided by a springloaded assembly coupled to the closure element. The safety valve is designed so that when the pressure in the line is below a predetermined threshold, defined as the set pressure, the valve port is sealed. However, when the pressure within the line exceeds the set pressure, the line pressure is sufficient to overcome the spring bias so that the valve lifts from its seating in the valve port and the medium within the pressure line may freely escape. In the prior art, safety valves are designed for specifically desired set pressures for various applications.

One problem in the use of such safety valves is the need to ensure that the set pressure for a valve, as installed, does not change with time, or, if the set point (= set pressure) does change, this change may be measured. In general, the set points for safety valves are periodically tested. In one approach to measuring set points, the valve is removed from the pressure line assembly, fitted to a test jig, tested for set point, and then reinstalled or replaced as necessary. This approach, of course, necessitates a shutdown of the pressure line during set point testing.

In an alternative approach known in the art (see, for example, US—A—3,269,170), a valve may be fitted with an air-operated lifting motor (in the form of a diaphragm sealed, air cylinder having a known effective area) coupled to the closure element, and a pressure gauge. In operation, a test operator applies air pressure to the air motor by way of an air pressure regulator or a manual control valve. The resultant force from the motor is applied to the closure element to lift the closure element against the springloaded bias. When the lifting force from the motor together with the force from the pressure within the line is sufficient to overcome the springloaded bias force, the closure element lifts off its seat, accompanied by an audible leak (or "pop"). When the "pop" is detected by the operator, the air pressure applied to the air motor is measured, and a differential force value may be derived from a predetermined relationship between those parameters for the valve. This differential pressure may be added to the pressure within the line to yield the set pressure characteristic for the valve.

While the audible "pop" which accompanies the lift of the closure element does provide a point at which a reliable set pressure measurement may be determined, this approach is not an acceptable test procedure in many applications. For example, there may be a relatively noisy environment where the test operator may not be able to detect the "audible pop". Furthermore, in some applications, such as in boiling water reactor plants, there are hazardous radiation environments in which the set point test operator may not safely enter the immediate region of the valve-to-be-tested. In the prior art, there have been attempts to utilize the above described "audible pop" technique with an acoustical transducer so that remote set point testing may be performed for valves in operational systems. However, these attempts have been unsuccessful, principally due to background noise.

It is an object of the present invention to provide a remote set pressure measurement device.

The present invention is apparatus for remote measurement of the set pressure of a safety valve coupled to the port of a pressure line, said valve having a closure element and a spring loaded means for biasing said closure element to a sealing position against said port, whereby said closure element is positioned to seal said port when the pressure within said line is less than said set pressure and said port is open otherwise, the apparatus comprising forcer means for applying an increasing force to said closure element in the direction opposite to said bias from said springloaded means, and means for detecting a test time when said closure element has moved a predetermined distance from said port in response to said force, the apparatus being characterised by a force transducer for generating a force signal F representative of the force applied to said closure element by said forcer means at said test time, and means for generating a signal representative of the set pressure characteristic of said valve, said set pressure corresponding to the sum of the pressure in said line and the ratio $F/A_s$, where $A_s$ is representative of the effective area of said port.

An embodiment of the present invention will now be described, by way of example, with reference to the accompanying drawings, in which:

Fig. 1 shows an embodiment of the present invention; and

Fig. 2 shows an exemplary configuration having two remote set pressure monitoring devices and a central controller in accordance with the present invention.

## Description of the Preferred Embodiment

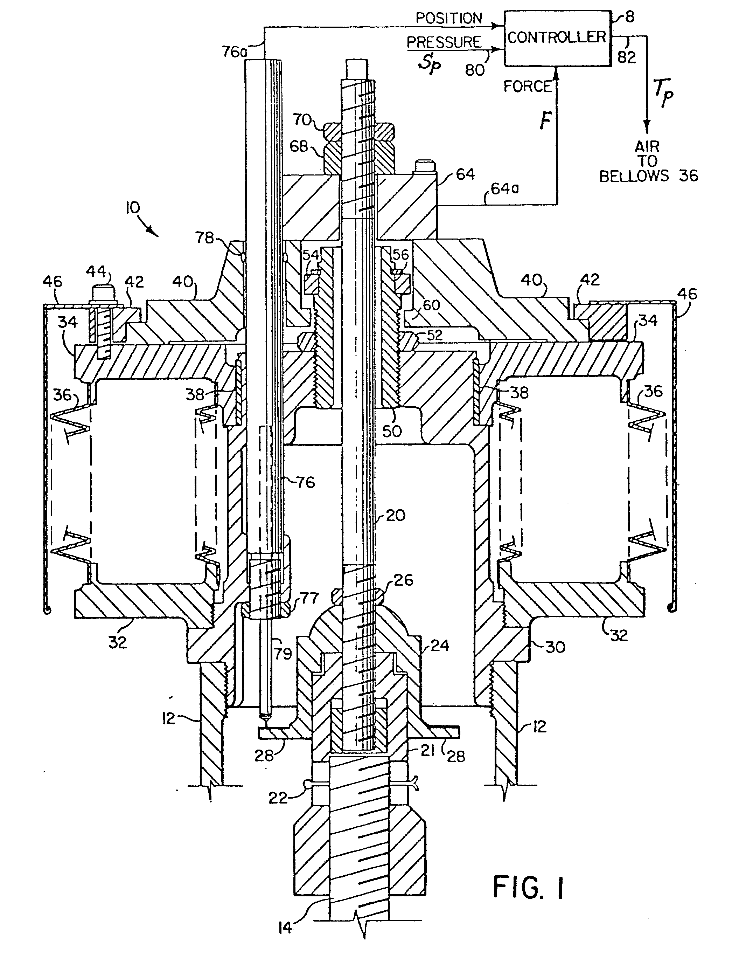

Figure 1 shows an embodiment of the present invention. As shown, this embodiment includes a controller 8 and a test assembly 10 screw-fit to the top, or bonnet, of a conventional safety valve which may be coupled at a part of a pressure line. By way of example, the safety valve may be a type HB valve, manufactured by Crosby Valve and Gage Company, Wrentham, Massachusetts (USA). This valve assembly includes a top, or bonnet, having a threaded portion 12. In addition, the closure element for the valve includes a spindle 14 extending from the closure element. This valve is merely exemplary and other forms of conventional valves may be readily be adapted for use with the present embodiment 10.

The test assembly 10 includes a spindle extension 20 which is coupled to the spindle 14 by way of a spindle nut 21 and cotter pin 22. A gauge head actuator 24 is affixed to the spindle extension 20 by a lock nut 26. The actuator 24 includes a substantially horizontal flange 28 to be described in more detail below.

The test assembly 10 also includes a main support member 30 which is screw fitted to the threaded portion 12 of the bonnet of the associated valve. The support member 30 supports an annular bellows assembly having a fixed lower base member 32, a movable upper base member 34, and a collapsible bellows 36 positioned between base members 32 and 34. The bellows assembly also includes an input coupling (not shown) for the passage of air to and from the interior of the bellows 36. A wear-strip 38 is affixed to support member 30 to minimize friction between upper base member 34 as it moves with respect to support member 30. As shown, the upper base member 34 is in its lowermost position. As the air pressure increases in the interior of bellows 36, the upper base member 34 is driven upwardly along the wear-strip 38.

A load plate 40 is adjacent to the base member 34. A retaining ring 42 and associated cap screws (including screw 44) are used to couple the load plate 40 to the base member 34 of the bellows assembly. As a result, the load plate 40 is coupled to the movable plate 34 of the bellows assembly, so that as the load plate moves vertically along the spindle extension 20, the load plate 40 moves with it. An outer housing member 46 is also supported by the cap screw 44, and the other cap screws, to the movable base member 34 of the bellows assembly. The outer housing 46 serves to a protective member to the bellows assembly.

A lift stop member 50 is screwed into the top of the main support member 30, and held in place by a lift stop lock nut 52. Lift stop 50 includes a collar 54 held in place by a retaining ring 56. In this configuration, the lift stop member 50 is affixed to the support member 30 which is affixed to the top portion 12 of the valve. As the movable base member 34 of the bellows assembly moves up and down, the load plate 40 moves up and down but is limited in the upward direction by the interfering engagement of the collar 54 with the flange 60 of the load plate 40.

At its upper end, the load plate 40 is coupled to a load cell, or force transducer, 64. By way of example, the load cell 64 may be a BLH type 44098-2 cell. The load cell 64 is limited from moving with respect to the spindle extension 20 by take-up nut 68 and jam nut 70. With this configuration, as the bellows 36 expands, the load plate 40 is displaced upwardly and compresses the load cell 64. The load cell 64 provides an output signal on line 64a representative of stress within the cell. Since the load cell 64 is coupled directly to the spindle extension 20, the output signal on line 64a corresponds to the force applied by the bellows assembly to the closure element (by way of spindle extension 20 and valve spindle 14).

The embodiment of Figure 1 also includes LVDT position transducer 76, which is affixed by lock nut 77 to the support member 30. In the present embodiment, the LVDT transducer 76 is a Trans-Tek type 354-000 gauge head. An O-ring 78 provides anti-vibration restraint for transducer 76. In addition O-ring 78 permits relatively friction-free motion of the load plate 40 with respect to the casing of transducer 76. The gauge head includes a core member 79, which is adapted to be driven by the flange 28 of the actuator 24 as the spindle 14 is raised or lowered (either by the bellows assembly or by pressure within the pressure line). The core 79 provides a variable predetermined coupling between the input and output coils of the transformer of the transducer 76, depending on the position of the closure element of the valve. The transducer 76 provides an output signal on line 76a which is representative of the position of the core 79 (which in turn is representative of the position of the valve closure element between a first limit position closing the valve port and a second limit position opening the valve port).

Controller 8 is coupled to line 76a (providing a closure element position signal), line 64a (providing a forcer signal) and line 80 (providing a signal representative of the pressure within the pressure line). Controller 8 also provides a control signal on line 82 for controlling air flow to bellows 36 in a conventional manner, and an output signal on line 84 representative of the set pressure for the valve.

In operation, at the initiation of a measurement cycle, the controller 8 controls the air pressure within the bellows assembly 36 to increase so that the bellows expand. In response to the bellows' expansion, the movable base 34 is raised upward and, in turn, moves the load plate 40. The motion of the plate 40 is transmitted directly to the force transducer 64 and the nuts 68 and 70 to the valve spindle extension 20, and then by way of the spindle 14 to the closure element. With the gradual increase of air pressure, the bellows provides an increasing force to the closure element. In the preferred form of the invention, the force increase is linear with the force increasing uniformly with time. Other embodiments may use non-linear force increases.

In response to the force applied by way of the bellows, the closure element is raised from the position where the valve seals the associated port in the pressure line, and the core 79 of the transducer 76 is pushed upward by the flange 28. As a result, the transducer 76 provides an output signal representative of the position of the valve closure element between a first limit position (where the closure element seals the port) and a second limit position (where the valve is full open).

The controller 8 monitors the signal on line 76a from the position transducer 76 and detects the "test time", i.e. the time when the core has been displaced by a predetermined distance (corresponding to the lift of the closure element of the valve assembly from the sealing position). At the time that this distance is reached by the core member 79, the controller 8 then obtains (via line 64a from the load cell) a signal representative of force applied to the force transducer 64. In addition, controller 8 obtains a signal representative of the pressure within the pressure line from line 80. The controller 8 then utilizes these signals to generate a set pressure signal $T_p$, which corresponds to the pressure within the line, $S_p$, plus the ratio $F/A_s$, where $A_s$ is the effective area of the closure element, and F is the force applied to the closure element at the test time. The controller in the present environment may be readily provided by conventional circuitry, such as by a microprocessor controller.

In alternative forms of the present invention, the controller 8 may be adapted to initially monitor (via line 64a) the force applied to the closure element (rather than the displacement). When the detected force reaches a predetermined threshold, the controller 8 checks (via line 76a) the position transducer to determine if the closure element has lifted from its seat. If so, the set pressure value is determined as described above. If the closure element has not yet lifted, then controller 8 directs an increase in force to the closure element and the cycle repeats until lift occurs and a set point value is determined.

In system configurations, a plurality of set pressure measurement devices similar to the one illustrated in Figure 1 can be utilized at various points along one or more pressure lines. The controller may be readily adapted using conventional techniques to sequentially activate a measurement cycle at each of the set pressure measuring devices, and record the set pressure for the respective valves. Alternatively, the controller may go one step further and compare the determined set pressure values with desired set pressure values for particular valves at the various locations and provide error signals at times when the set pressure for the valve tested is more than a predetermined tolerance value away from the desired value.

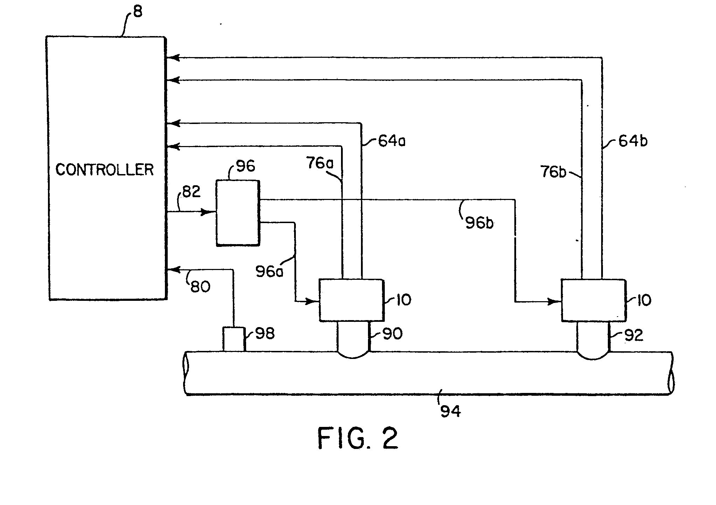

Figure 2 illustrates an exemplary system wherein test assemblies similar to that shown in Figure 1 are connected to valves 90 and 92 along a pressure line 94. In Figure 2, elements substantially similar to those in Figure 1 are identified with the same reference designations. Each of the valves 90 and 92 includes a test assembly 10 coupled thereto. An air flow regulator 96 is driven by signals from line 82 of controller 8 to provide air flow on line 96a and 96b for the respective bellows assemblies. Figure 2 also shows a pressure transducer 98 which detects the pressure within line 94 and generates a corresponding signal on line 80. In this configuration, separate force and position signal lines are used to couple the transducers with controller 8. It will be understood that conventional data communication systems may be readily adapted to provide this signal communication link between the controller 8 and the various test assemblies, for example, by conventional time division multiplex techniques.

In operation, the central controller 8 may be programmed for a periodic monitoring of the set pressures for the valves on pressure line 94. For example, the valve 90 may be tested at a first time by driving regulator 96 so that an increasing force is applied to the closure element by way of the bellows assembly and load plates associated with the set pressure measuring device coupled to valve 90. By monitoring the position signal of the actuator by way of line 76a, the controller 8 can detect the test time for that assembly and then detect the value of applied force at that test time provided by transducer 64 by way of line 64a, and then compute the set pressure for the valve 90 using signals representative of pressure $S_p$ within the line 94 and the effective area $A_s$ of the valve closure element. The controller may then compare this measured set pressure value with a reference set pressure value, and either accept the measured value as being within tolerance, or signal a warning condition for a value out of tolerance. The controller may then go on to test the set pressure of the safety valve 92. In the present embodiment, it is assumed that the pressure within line 94 is provided by sensor 98 for the various valves in the system. In some configurations, pressure sensors must be utilized at the various remote locations in order to get an accurate pressure value for the valves to be tested at those locations.

In alternative system configurations, for each valve, the "test time" determination may be made based to detection of a threshold force applied to the closure element, rather than detection of a predetermined displacement of the closure element.

## Claims

1. Apparatus for remote measurement of the set pressure of a safety valve coupled to the port of a pressure line, said valve having a closure element and a spring loaded means for biasing said closure element to a sealing position against said port, whereby said closure element is positioned to seal said port when the pressure within said line is less than said set pressure and said port is open otherwise; the apparatus comprising
— forcer means (34, 36, 40) for applying an increasing force to said closure element in the direction opposite to said bias from said springloaded means, and
— means (76) for detecting a test time when said closure element has moved a predetermined distance from said port in response to said force; the apparatus being characterised by:
— a force transducer (64) for generating a force signal F representative of the force applied to said closure element by said forcer means at said test time, and
— means (8) for generating a signal $(T_p)$ representative of the set pressure characteristic of said valve, said set pressure $(T_p)$ corresponding to the sum of the pressure $(S_p)$ in said line and the ratio $F/A_s$, where $A_s$ is representative of the effective area of said port.

2. Apparatus as claimed in claim 1, characterised by means for generating a pressure signal $(S_p)$ representative of the pressure within the line at said test time.

3. Apparatus as claimed in claim 1 or claim 2, characterised by
— a position transducer (76) for generating a position signal representative of the position of said closure element between first and second limit positions,
— controller means (8) selectively operable to control a set pressure measurement cycle including means for activating said forcer means (34, 36, 40), and means for monitoring said position transducer (76) and said force transducer (64), and, in response to detection of said test time, for disabling said forcer means.

4. A system comprising a plurality of apparatus as claimed in claim 1, for monitoring a plurality of remote safety valves and characterised in that said controller means (8) is selectively operable to control the set pressure measurement cycle of each of said remote valves.

5. Apparatus as claimed in claim 1, characterised in that said position transducer (76) includes an associated extension member (20) and gage actuator flange member (28), coupled to and extending from said closure element (14) and adapted to drive said position transducer (76) in response to motion of said closure element between said first and second limit positions, wherein said forcer means includes a bellows assembly (36) having a first end (32) fixed with respect to said port and a second end (34) coupled to said closure element, and means for selectively moving said second end with respect to said first end to drive said closure element between said first and second limit positions, and wherein said force transducer (64) is coupled between said second end (34) of said bellows assembly and said extension member (20), wherein said controller means (8) includes means for selectively actuating and disabling said moving means.

## Patentansprüche

1. Vorrichtung zur Fernmessung des Solldruckes eines mit der Öffnung einer Druckleitung verbundenen Sicherheitsventils mit einem Verschlußglied und einer federbelasteten Einrichtung zum Drücken des Verschlußgliedes in eine Abdichtungsstellung gegen die Öffnung, wobei das Verschlußglied derart angeordnet ist, daß die Öffnung abgedichtet ist, wenn der Druck in der Leitung niedriger als der Solldruck ist, und die Öffnung anderenfalls offen ist und die Vorrichtung
— Druckmittel (34, 36, 40) zum Aufbringen einer ansteigenden Kraft auf das Verschlußglied in der Druckkraft von der federbelastenten Einrichtung entgegengesetzter Richtung und
— Mittel (75) zum Erfassen einer Prüfzeit, wenn sich das Verschlußglied eine vorbestimmte Strecke von der Öffnung infolge der genannten Kraft bewegt hat, umfaßt, gekennzeichnet durch
— einen Krafttransmitter (64) zum Erzeugen eines Kräftesignal F entsprechend dem auf das Verschlußglied von dem Druckmittel bei Prüfzeit aufgebrachten Druck und
— Mittel (8) zum Erzeugen eines Signals $(T_p)$ entsprechend der Solldruckcharakteristik des Ventils, wobei der Solldruck $(T_p)$ der Summe des Druckes $(S_p)$ in der Leitung und dem Verhältnis $F/A_s$ entspricht, worin $A_s$ die wirksame Fläche der Öffnung darstellt.

2. Vorrichtung nach Anspruch 1, gekennzeichnet durch Mittel zum Erzeugen eines Drucksignals $(S_p)$ entsprechend dem Druck in der Leitung bei Prüfzeit.

3. Vorrichtung nach Anspruch 1 oder 2, gekennzeichnet durch
— einen Stellungsgeber (76) zum Erzeugen eines Stellungssignals entsprechend der Stellung des Verschlußgliedes zwischen der ersten und der zweiten Grenzstellung und
— eine nach Wahl betätigbares Steuergerät (8) zum Steuern eines Solldruckmeßvorgangs, das Mittel zum Aktivieren des Druckmittels (34, 36, 40) und Mittel zum Überwachen des Stellungsgebers (76) und des Kraftmitters (64) sowie, in Abhängigkeit von der Erfassung der Prüfzeit, zum Unwirksammachen des Druckmittels umfaßt.

4. System mit einer Mehrzahl von Vorrichtungen nach Anspruch 1 zum Überwachen einer Mehrzahl fernliegender Sicherheitsventile, dadurch gekennzeichnet, daß das Steuergerät (8) nach Wahl zum Steuern des Solldruckmeßvorgangs jedes der fernliegenden Ventile betätigbar ist.

5. Vorrichtung nach Anspruch 1, dadurch gekennzeichnet, daß der Stellungsgeber (76) ein zugeordnetes Verlängerungsglied (20) und ein Meßbetätigungsflanschteil (28) umfaßt, die mit dem Vorschlußglied (14) verbunden sind sowie von diesem ausgehen und mittels welcher der Stellungsgeber (76) infolge einer Bewegung des Verschlußgliedes zwischen der ersten und der zweiten Grenzstellung antreibbar ist, das Druckmittel eine Balganordnung (36) mit einem ersten, in bezug auf die Öffnung festen Ende (32) und einem zweiten, mit dem Verschlußglied verbundenen Ende (34) umfaßt, Mittel zum wahlweisen Bewegen des zweiten Endes in bezug auf das erste Ende zum Bewegen des Verschlußgliedes zwischen der ersten und der zweiten Grenzstellung vorgesehen sind und daß der Krafttransmitter (64) zwischen dem zweiten Ende (34) der Balganordnung und dem Verlängerungglied (20) angeschlossen ist und das Steuergerät (8) Mittel zum wahlweisen Wirksam- und Unwirksammachen der Bewegungsmittel umfaßt.

## Revendications

1. Appareil pour la mesure à distance de la pression de tarage d'une soupape de sûreté branchée à l'orifice d'une conduite sous pression, cette soupape comportant un élément d'obturation et des moyens soumis à l'action d'un ressort qui sont destinés à solliciter l'élément d'obturation vers une position d'obturation contre l'orifice, grâce à quoi l'élément d'obturation est positionné de façon à obturer l'orifice lorsque la pression dans la conduite est inférieure à la pression de tarage, et l'orifice est ouvert dans le cas contraire; l'appareil comprenant

— des moyens d'application de force (34, 36, 40) destinés à appliquer une force croissante à l'élément d'obturation, dans la direction opposée à celle dans laquelle il est sollicité par les moyens soumis à l'action d'un ressort, et

— des moyens (76) destinés à détecter un instant de test lorsque l'élément d'obturation s'est déplacé d'une distance prédéterminée à partir de l'orifice sous l'effet de ladite force; l'appareil étant caractérisé par:

— un transducteur de force (64) destiné à générer un signal de force G représentatif de la force qui est appliquée à l'élément d'obturation par les moyens d'application de force à l'instant de test, et

— des moyens (8) destinés à générer un signal ($T_p$) représentatif de la pression de tarage caractéristique de la soupape, cette pression de tarage ($T_p$) correspondant à la somme de la pression ($S_p$) dans la conduite et du rapport $F/A_s$, dans lequel $A_s$ est représentatif de l'aire effective de l'orifice.

2. Appareil tel que revendiqué dans la revendication 1, caractérisé par des moyens pour générer un signal de pression ($S_p$) représentatif de la pression à l'intérieur de la conduite à l'instant de test.

3. Appareil tel que revendiqué dans la revendication 1 ou la revendication 2, caractérisé par

— un transducteur de position (76) destiné à générer un signal de position représentatif de la position de l'élément d'obturation entre des première et seconde positions limites,

— des moyens de commande (8) qu'on peut faire fonctionner sélectivement pour commander un cycle de mesure de pression de tarage, comprenant des moyens pour activer les moyens d'application de force (34, 36, 40), et des moyens pour contrôler le transducteur de position (76) et le transducteur de force (64), et pour mettre hors fonction les moyens d'application de force sous l'effet de la détection de l'instant de test.

4. Un système comprenant un ensemble d'appareils tels que celui revendiqué dans la revendication 1, pour contrôler un ensemble de soupapes de sûreté éloignées, et caractérisé en ce qu'on peut faire fonctionner sélectivement les moyens de commande (8) pour commander des cycle de mesure de pression de tarage de chacune des soupapes éloignées.

5. Appareil tel que revendiqué dans la revendication 1, caractérisé et ce que le transducteur de position (76) comporte une pièce de prolongement (20) et une collerette d'actionneur de jauge (28) associées, accouplées à l'élément d'obturation (14) et s'étendant à partir de ce dernier, et conçues pour entraîner le transducteur de position (76) sous l'effet du mouvement de l'élément d'obturation entre les première et seconde positions limites, en ce que les moyens d'application de force comprennent une structure à soufflet (36) ayant une première extrémité (32) fixe par rapport à l'orifice et une seconde extrémité (32) accouplée à l'élément d'obturation, et des moyens pour déplacer sélectivement la seconde extrémité par rapport à la première extrémité, afin d'entraîner l'élément d'obturation entre les première et seconde positions limites, et en ce que le transducteur de force (64) est monté entre la seconde extrémité (34) de la structure à soufflet et la pièce de prolongement (20), les moyens de commande (8) comprenant des moyens pour actionner et mettre hors fonction de façon sélective les moyens de déplacement.

0 017 365

POSITION

PRESSURE
$S_p$

CONTROLLER 8

82

$T_p$

FORCE

$F$

AIR TO BELLOWS 36

FIG. I

FIG. 2